# EUROPEAN PATENT APPLICATION

(11) **EP 4 752 805 A1**
(43) Date of publication of application: **03.06.2026**
(21) Application number: 24216201.4
(22) Date of filing: 28.11.2024
(51) Int. Cl.: G06Q 10/20

(54) **SYSTEMS AND METHODS FOR ASSISTING OPERATION AND MAINTENANCE OF MARINE MACHINE EQUIPMENT**

(71) Applicant: Alfa Laval Corporate AB, 221 00 Lund (SE)
(72) Inventor: KARLSSON, Jimmie, 147 63 Uttran (SE); BOMAN, Jesper, 149 50 Nynäshamn (SE)
(74) Representative: Alfa Laval Attorneys

(57) **Abstract**

The present invention relates to a method of operating and maintaining a piece of marine machine equipment. The piece of marine machine equipment is connected to a local processor. The method comprising the steps of obtaining a set of training data specific to the piece of marine machine equipment and training a Small Language Model (SLM) with the set of training data specific to the piece of marine machine equipment. The method further comprising the step of executing the trained SLM on the local processor to provide an operational advice for the piece of marine machine equipment wherein the SLM operates offline and utilizes real-time data obtained from the piece of marine machine equipment.

## Description

### Background

The present application generally relates to systems and methods for assisting operation and maintenance of marine machine equipment, and more particularly to the integration of data analysis and communication technologies in maritime environments. Related domains include control or regulating systems in general, functional elements of such systems, monitoring or testing arrangements for such systems or elements, information and communication technology (ict) specially adapted for administrative, commercial, financial, managerial or supervisory purposes, systems or methods specially adapted for administrative, commercial, financial, managerial or supervisory purposes and transmission of digital information, e.g. telegraphic communication.

DE202023104539 describes an AI-controlled decanter having an HMI, PLC and sensors to be able to analyze, recognize and display events and states of the machine e.g. a fire or impending fire, quality of grounding, possible wear or tear in drives, transmissions or hydraulics. It may issue warnings/alarms when maintenance is needed or automatically (or manually) adjust the operating parameters etc.

CN117905579 describes an AI-driven marine engine operation and maintenance system which may predict maintenance and fault diagnosis of a marine engine. Uses a pre-trained Large Language Model.

US20200173882 describes how AI is used for a heat exchanger. Empirical model is trained by training data.

CN118242259 describes how an air compressor is using AI trained according to historical data using e.g. natural language processing.

EP4327948 describes an AI controlled decanter which may comprise a HMI, an IoT Edge Device and a cloud service.

JP7457174 describes an Al-controlled centrifugal separator.

JP7357878 describes a machine learning/training equipment for a centrifugal separator having an interface PC.

CN113313272 describes a marine machinery equipment warning system using artificial intelligence based on natural language processing and historical data as help for the operation and maintenance personnel.

KR102704896 describes how a learning language model and natural language processing are used for marine engineering data. Using AI and machine-learning.

This application addresses the problem of inefficient operation and maintenance of marine machine equipment due to the lack of accessible, real-time operational guidance tailored to specific equipment.

The object of the present invention is to provide solutions for the challenges faced by operators and maintenance personnel in accessing relevant information and support for troubleshooting, repair, and service activities. Traditional methods often rely on outdated manuals, fragmented data sources, and reactive maintenance strategies, leading to increased downtime and operational risks.

### Summary of the invention

The object of the present invention is in a first aspect achieved by a method of operating and maintaining a piece of marine machine equipment, the piece of marine machine equipment being connected to a local processor, the method comprising the steps of:
obtaining a set of training data specific to the piece of marine machine equipment,
training a Small Language Model (SLM) with the set of training data specific to the piece of marine machine equipment, and
executing the trained SLM on the local processor to provide an operational advice for the piece of marine machine equipment, wherein the SLM operates offline and utilizes real-time data obtained from the piece of marine machine equipment.

The piece of marine machine equipment can be any machine equipment found on board a vessel. Examples include but are not limited to: ballast water treatment systems, exhaust gas cleaning systems (scrubbers), heating and cooling systems, fresh water generation systems, steam generation systems, thermal fluid heating systems, waste heat recovery systems, oil cleaning systems, filtration systems, fuel supply systems, oily water separation systems, sludge dewatering systems, crankcase gas cleaning systems, tank management systems, exhaust gas recirculation systems, water treatment systems, inert gas production systems, cargo handling systems, marine service solutions, navigation systems, communication systems, deck machinery, safety equipment, propulsion systems, steering gear, cargo handling equipment, automation systems, control systems, accommodation systems, hull components and structural components.

The use of a Small Language Model (SLM) trained on data specific to the piece of marine machine equipment ensures tailored operational advice, enhancing the accuracy and relevance of the guidance provided for the marine machine equipment.

Compared to using more complex systems, the use of an SLM has the advantage of allowing high efficiency and performance while requiring less size, complexity and computational resources. Operating the SLM offline on a local processor allows for uninterrupted access to operational advice, independent of network connectivity. This is particularly beneficial in marine environments where internet access may be absent and/or unreliable. The local processor is understood to be a processor located in the vicinity of the piece of machine equipment, or at least on board the same vessel as the piece of machine equipment.

The real-time data obtained from the piece of marine machine equipment is used as input to the SML. The ability of the SLM to process real-time data from the equipment enables dynamic and immediate responses to operational conditions, potentially reducing downtime and improving the efficiency of maintenance procedures.

The method according to the first aspect allows for automating the operating and maintaining the marine machine equipment, thereby reducing the need for manual intervention and enhancing the efficiency. Further, it allows for a seamless integration with existing marine equipment and infrastructure for improved functionality.

The method according to the first aspect can be standardized for ensuring consistent operational advice and maintenance procedures across various types of marine machine equipment using a single user interface. It provides the advantage of enabling timely access to operational advice and maintenance recommendations which can enhance and accelerate decision-making processes.

Overall, the serviceability, troubleshooting and repair processes will be improved through the use of a trained Small Language Model (SLM) that offers targeted guidance.

According to a further embodiment of the first aspect, the training data includes any of the following: machine manuals, historic helpdesk tickets, service reports, service bulletins, fault-finding diagrams.

Incorporating equipment manuals into the training data enriches the SLM's knowledge base, allowing it to provide advice that is consistent with manufacturer recommendations and industry standards. The inclusion of equipment manuals in the training process enables the SLM to reference specific procedural guidelines, thereby reducing the likelihood of operator error and enhancing the safety of maintenance operations.

The integration of historical helpdesk tickets and service reports into the training data allows the SLM to learn from past incidents, improving its ability to predict and prevent future issues with the equipment. By analyzing service reports and helpdesk tickets, the SLM can identify common patterns and recurring problems, facilitating a more proactive approach to maintenance and potentially extending the lifespan of the equipment.

Training the SLM with service bulletins and fault-finding diagrams ensures that the model is updated with the latest troubleshooting techniques and modifications, keeping the operational advice current and effective. The inclusion of fault-finding diagrams in the training data enables the SLM to assist in diagnosing complex issues more accurately, thereby reducing the time required to resolve equipment malfunctions.

According to a further embodiment of the first aspect, the real-time data includes any of the following: telemetry data, sensor readings, events, alarms environmental factors.

Sensor and telemetry data may include readings from various internal and external data collectors monitoring and informing the SLM of the status of the equipment and the vessel. Sensors may include flow sensors, humidity Sensors, temperature sensors, pressure sensors, strain sensors, speed sensors, echo sounder readings, RPM and torque meter, thrust meter, rudder indicator, stabilizer fins position sensor, wind anemometer, GPS, gas detection sensors.

By considering environmental factors, the SLM can offer operational advice that optimizes performance and safety under varying conditions, such as different sea states or weather scenarios, enhancing the adaptability of the equipment.

According to a further embodiment of the first aspect, the operational advice includes any of the following: troubleshooting, repair guidance, service guidance, identifying a spare part, locating a spare part, scheduled maintenance needs, unscheduled maintenance needs.

The SLM's assistance in identifying and locating correct spare parts streamlines the maintenance process by reducing the time and effort required to determine the necessary components for repair, which can be particularly beneficial in time-critical situations. By ensuring that the correct spare parts are used, the system helps maintain the integrity and performance of the marine machine equipment, which can lead to longer equipment life and reduced risk of malfunctions.

The provision of advice on both scheduled and non-scheduled maintenance needs by the SLM allows for proactive maintenance strategies, reducing the likelihood of unexpected equipment failures and minimizing downtime. The capability to anticipate non-scheduled maintenance requirements enables the allocation of resources more efficiently, ensuring that maintenance personnel and materials are available when needed, thereby optimizing operational workflows.

By advising on maintenance needs, the SLM contributes to extending the lifespan of equipment through timely interventions, leading to long-term cost savings and enhanced asset management for the user.

According to a further embodiment of the first aspect, the method further comprising the additional step of analyzing operator operational behavior for enhancing the SLM.

Enhancing the SLM through the analysis of operator operational behavior can lead to a more intuitive and user-centric operational advice that adapts to the specific preferences and techniques of individual operators, thereby improving user satisfaction and efficiency.

By incorporating behavioral analysis, the SLM can identify and learn from patterns in operator behavior, potentially leading to the early detection of operational errors or inefficiencies, which can be corrected proactively to maintain optimal system performance.

According to a further embodiment of the first aspect, the local processor is part of a real-time control system, such as a PLC (Programmable Logic Controller).

Integration of the local processor within a real-time control system (PLC) allows for seamless interaction between the SLM and the equipment's operational processes, facilitating immediate adjustments and interventions based on the SLM's advice.

This integration can lead to a more compact and efficient system architecture, reducing the need for additional hardware and simplifying installation and maintenance.

According to a further embodiment of the first aspect, the local processor is an edge device for managing data logging and/or data transfer, preferably the edge device being a Field Gateway (FGW).

Integration of the local processor within an edge device such as Field Gateway (FGW) enables efficient data logging and transfer to a cloud service, which can be used for further analysis, predictive maintenance, and long-term performance optimization. A particular advantage of using an edge device for running the SLM when offline is that the edge device will not be occupied with sending and receiving data. It will thus be free for other computational tasks, such as running the SLM.

The FGWs capability to connect with a cloud service allows for remote monitoring and management of the marine machine equipment, providing operators with access to real-time information and the ability to make informed decisions from offsite locations.

According to a further embodiment of the first aspect, the method further comprising the steps of:
connecting the local processor to an online cloud service, and
updating the SLM with additional training data obtained from the online cloud service.

The integration of collective wisdom from multiple SLM's via a cloud service enhances the accuracy and reliability of the predictive analytics, leading to improved decision-making processes.

The ability to update the central SLM with diverse data sets from various sources ensures that the SLM remains current and reflective of the latest trends and patterns, thereby maintaining its relevance and effectiveness over time.

According to a further embodiment of the first aspect, the additional training data is based on other SLM's connected to the online cloud service.

By leveraging cloud connectivity, the SLM can scale efficiently. Allowing an increasing number of SLM's to communicate provides a cost-effective solution for large-scale deployments without significant additional infrastructure investment.

According to a further embodiment of the first aspect, the execution of the trained SLM includes an interaction with the SLM through a Human-Machine Interface (HMI) or a mobile device connected locally or remote.

Providing interaction with the SLM through a Human-Machine Interface (HMI) or a mobile device facilitates ease of use and accessibility for operators, allowing them to monitor and control the system conveniently from various locations, whether onsite or remotely.

The flexibility to connect locally or to a cloud service via HMI or mobile devices ensures that operators can access the system and receive updates in real-time, which is essential for dynamic environments where conditions can change rapidly.

According to a further embodiment of the first aspect, the execution of the trained SLM includes an interaction with the SLM through voice.

Allowing the user to control the SMI via voice commands will further simplify the suer interaction with the SLM.

The object of the present invention is in a second aspect achieved by a system for assisting operation and maintenance of a piece of marine machine equipment, the system comprising:
a Small Language Model (SLM) trained with a set of training data specific to the piece of marine machine equipment, and,
a local processor configured to execute the SLM to provide operational advice, wherein the SLM is adapted to operate offline using real-time data obtained from the piece of marine machine equipment.

The system according to the second aspect can be used together with the methods according to the first aspect. The integration of a Small Language Model (SLM) trained with equipment-specific data ensures that the operational advice provided is highly relevant and tailored to the unique characteristics of the marine machine equipment, leading to more accurate and efficient operation.

By configuring the local processor to execute the SLM offline using real-time equipment data, the system offers uninterrupted assistance even in environments with limited or no connectivity, which is common in marine settings.

The object of the present invention is in a third aspect achieved by a computer program comprising instructions which, when the program is executed by a computer, cause the computer to carry out the method according to the first aspect.

The computer program may include the SLM and may be executed on the local processor associated with the piece of marine machine equipment.

The object of the present invention is in a fourth aspect achieved by a computer-readable medium having stored thereon the computer program according to the third aspect.

### Brief description of the drawings

Fig. 1 shows the obtaining of a set of training data from a piece of marine machine equipment and the training of the Small Language Model (SLM).
Fig. 2 shows the execution of the Small Language Model (SLM) using the obtained training data.

### Detailed description of the drawings

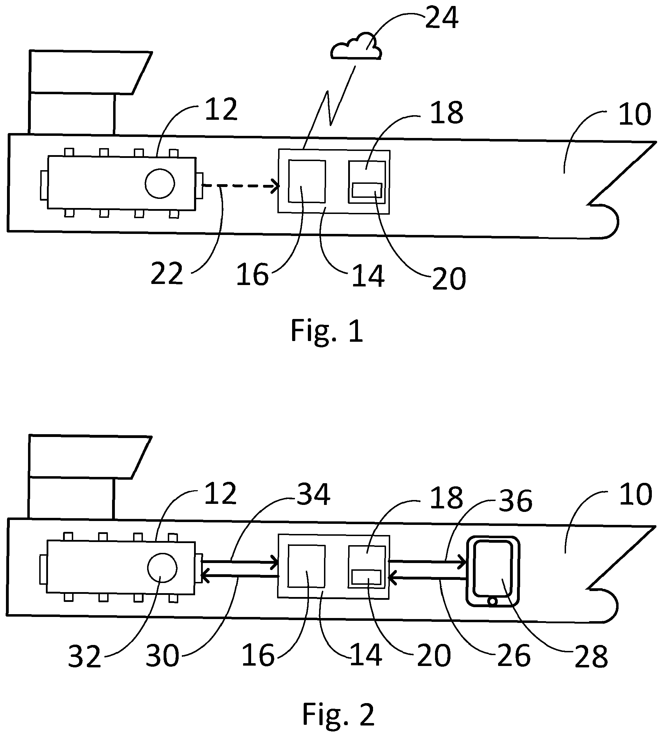

Fig. 1 shows a vessel 10 having a piece of marine machine equipment 12. The vessel 10 further comprising an edge device 14 associated with the piece of marine machine equipment 12. The edge device 14 comprising a local processor 16 and a local storage device 18. A Small Language Model (SLM) 20 is stored on the local storage device 18. The SLM 20 runs on the local processor 16. The SLM 20 is trained using training data 22 being specific to piece of marine machine equipment 10. The training data 22 can be machine manuals, historic helpdesk tickets, service reports, service bulletins, fault-finding diagrams etc. The training data can be retrieved via online sources such as a cloud service 24.

Fig. 2 shows the execution of the trained Small Language Model (SLM) 20 while being off-line. The SLM 20 runs on the local processor 16. An inquiry 26 may be sent to the Small Language Model (SLM) 20 from the user via a portable device 28. The Small Language Model (SLM) 20 may send a request 30 to the piece of marine machine equipment 12, e.g. to sensors 32 associated with the marine machine equipment 12. The piece of marine machine equipment 12 may send real-time data 34 from the piece of marine machine equipment 12 to the SLM 20. The real-time data 34 can be based on telemetry data, sensor readings, events, alarms, environmental factors. The SLM 20 provides an operational advice 36 for the piece of marine machine equipment 12. The operational advice 36 may be presented on the portable device 28. The operational advice 28 can be troubleshooting, repair guidance, service guidance, identifying a spare part, locating a spare part, scheduled maintenance needs, unscheduled maintenance needs.

## Claims

1. A method of operating and maintaining a piece of marine machine equipment, the piece of marine machine equipment being connected to a local processor, the method comprising the steps of:
obtaining a set of training data specific to the piece of marine machine equipment,
training a Small Language Model (SLM) with the set of training data specific to the piece of marine machine equipment, and
executing the trained SLM on the local processor to provide an operational advice for the piece of marine machine equipment, wherein the SLM operates offline and utilizes real-time data obtained from the piece of marine machine equipment.

2. The method according to claim 1, wherein the training data includes any of the following: machine manuals, historic helpdesk tickets, service reports, service bulletins, fault-finding diagrams.

3. The method according to any of the claims 1-2, wherein the real-time data includes any of the following: telemetry data, sensor readings, events, alarms, environmental factors.

4. The system according to any of the claims 1-3, wherein the operational advice includes any of the following: troubleshooting, repair guidance, service guidance, identifying a spare part, locating a spare part, scheduled maintenance needs, unscheduled maintenance needs.

5. The method according to any of the claims 1-4, wherein the method further comprising the additional step of analyzing operator operational behavior for enhancing the SLM.

6. The method according to any of the claims 1-5, wherein the local processor is part of a real-time control system, such as a PLC.

7. The method according to any of the claims 1-6, wherein the local processor is an edge device for managing data logging and/or data transfer, preferably the edge device being a Field Gateway (FGW).

8. The method according to any of the claims 1-7, wherein the method further comprising the steps of:
connecting the local processor to an online cloud service, and
updating the SLM with additional training data obtained from the online cloud service.

9. The method according to claim 8, wherein the additional training data is based on other SLMs connected to the online cloud service.

10. The method according to any of the claims 1-8, wherein the execution of the trained SLM includes an interaction with the SLM through a Human-Machine Interface (HMI) or a mobile device connected locally or remote.

11. The method according to any of the claims 1-8, wherein the execution of the trained SLM includes an interaction with the SLM through voice.

12. A system for assisting operation and maintenance of a piece of marine machine equipment, the system comprising:
a Small Language Model (SLM) trained with a set of training data specific to the piece of marine machine equipment, and,
a local processor configured to execute the SLM to provide operational advice, wherein the SLM is adapted to operate offline using real-time data obtained from the piece of marine machine equipment.

13. The system according to claim 12, further comprising any of the features of claims 2-11.

14. A computer program comprising instructions which, when the program is executed by a computer, cause the computer to carry out the method of any of the claim 1-11.

15. A computer-readable medium having stored thereon the computer program of claim 14.
